(19) Europäisches Patentamt / European Patent Office / Office européen des brevets

(11) **EP 3 968 418 B1**

(12) **EUROPEAN PATENT SPECIFICATION**

(45) Date of publication and mention
of the grant of the patent:
**19.03.2025 Bulletin 2025/12**

(21) Application number: **19931131.7**

(22) Date of filing: **06.06.2019**

(51) International Patent Classification (IPC):
***H01M 4/66*** (2006.01)

(52) Cooperative Patent Classification (CPC):
**H01M 4/661; H01M 4/667; H01M 4/668;**
**Y02E 60/10**

(86) International application number:
**PCT/CN2019/090412**

(87) International publication number:
**WO 2020/237714 (03.12.2020 Gazette 2020/49)**

(54) **COMPOSITE CURRENT COLLECTOR, ELECTRODE PLATE, AND ELECTROCHEMICAL DEVICE**

VERBUNDSTROMABNEHMER, ELEKTRODENPLATTE UND ELEKTROCHEMISCHE
VORRICHTUNG

COLLECTEUR DE COURANT COMPOSITE, PLAQUE D'ÉLECTRODE ET DISPOSITIF
ÉLECTROCHIMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2019 CN 201910472007**

(43) Date of publication of application:
**16.03.2022 Bulletin 2022/11**

(73) Proprietor: **Contemporary Amperex Technology
(Hong Kong) Limited
Central, Central And Western District (HK)**

(72) Inventors:
 • **LIU, Xin**
  **Ningde, Fujian 352100 (CN)**
 • **WANG, Shiwen**
  **Ningde, Fujian 352100 (CN)**
 • **HUANG, Qisen**
  **Ningde, Fujian 352100 (CN)**
 • **LI, Cheng**
  **Ningde, Fujian 352100 (CN)**
 • **LI, Mingling**
  **Ningde, Fujian 352100 (CN)**
 • **PENG, Jia**
  **Ningde, Fujian 352100 (CN)**
 • **LIU, Xianghui**
  **Ningde, Fujian 352100 (CN)**

(74) Representative: **Boult Wade Tennant LLP
Salisbury Square House
8 Salisbury Square
London EC4Y 8AP (GB)**

(56) References cited:
 **CN-A- 106 654 285    CN-A- 106 910 897
 CN-A- 108 281 662    US-A1- 2005 221 190**

**Description**

## TECHNICAL FIELD

This application belongs to the technical field of electrochemical devices, and especially relates to a composite current collector, an electrode plate, and an electrochemical device.

## BACKGROUND

Electrochemical devices, such as lithium-ion secondary batteries have relatively high charge and discharge performance and environmental friendliness, and have been widely used in electric vehicles and consumer electronic products. Current collectors are important parts of the electrochemical devices. They not only provide support for active material layers, but also collect current generated by the active material layers for external output. Therefore, the current collectors have an important influence on the performance of electrode plates and electrochemical devices. In light of the above, the present application proposes a composite current collector with excellent performances and also proposes an electrode plate and electrochemical device using the composite current collector.

US2005/221190A1 discloses a current collector comprising a polymer support layer and a conductive metal layer disposed on at least part of the surface of the polymer support layer. Moreover, the current collector of US2005/221190A1 also includes a first conductive metal layer and a first protective layer on one side of the polymer support layer, and a second conductive metal layer and a second protective layer on the other side of the polymer support layer.

CN106654285A discloses a flexible current collector comprising a flexible substrate layer, a metal conductive plating layer and a conductive anti-oxidation layer that are closely bonded in sequence.

## SUMMARY

The embodiments of the present application provides a composite current collector, an electrode plate and an electrochemical device, aiming to obtain a composite current collector having improved mechanics and mechanical properties while having both good electrical conductivity and current collection performance, and at the same time to obtain an electrochemical device having improved weight energy density.

In a first aspect, the present application provides a composite current collector in accordance with claim 1.

In a second aspect, the present application provides an electrode plate, including a current collector and an active material layer disposed on the current collector, wherein the current collector is the composite current collector according to the first aspect of the present application.

In a third aspect, the present application provides an electrochemical device, including a positive electrode plate, a negative electrode plate and an electrolyte, wherein the positive electrode plate and/or the positive electrode plate are/is the electrode plate according to the second aspect of the present application.

The embodiments of the present application provide a composite current collector, an electrode plate and an electrochemical device. The composite current collector includes an organic support layer and a metal conductive layer disposed on the organic support layer, and the composite current collector has a brittleness parameter C of $0.01 \leq C \leq 0.5$. Thus, the composite current collector has appropriate toughness, which ensures that the composite current collector has relatively high mechanics and mechanical properties, so that the composite current collector can withstand certain deformation without breakage during the production and working process of the electrochemical device. This is favorable to improve the processability property of the composite current collector and its stability during use, and to effectively prevent it from breaking or cracking during preparation and use, thereby significantly improving yields of the composite current collector and the electrode plate and electrochemical device using the same during preparation and their reliability during use. The brittleness parameter C of the composite current collector being within above range may ensure the composite current collector to have good electrical conductivity and current collecting performance, so that the electrochemical device has relatively high electrochemical performance. In addition, the composite current collector provided by the present application can also increase gravimetric energy density of the electrochemical device.

## DESCRIPTION OF THE DRAWINGS

In order to explain the technical solutions of the embodiments of the present application more clearly, the following will briefly introduce the drawings that need to be used in the embodiments of the present application. A person of ordinary skill in the art can obtain other drawings based on the drawings without creative work.

Fig. 1 is a schematic structural diagram of a composite current collector according to an embodiment of the present application.

Fig. 2 is a schematic structural diagram of a composite current collector according to another embodiment of the present application.

Fig. 3 is a schematic structural diagram of a composite current collector according to another embodiment of the present application.

Fig. 4 is a schematic structural diagram of a composite current collector according to another embodiment of the present application.

Fig. 5 is a schematic structural diagram of a composite current collector according to another embodiment of the present application.

Fig. 6 is a schematic structural diagram of an electrode plate according to an embodiment of the present application.

Denotation of the reference numerals: 10-Composite current collector; 101-Organic support layer; 101a-First surface; 101b-Second surface; 1011-First sublayer; 1012-Second sublayer; 1013-Third sublayer; 102-Metal conductive layer; 103-Protective layer; 20-Active material layer; 30-Electrode plate.

## DETAILED DESCRIPTION

In order to make the objectives, technical solutions and beneficial technical effects of the present application clearer, the present application will be further described in detail below in conjunction with embodiments. It should be understood that the embodiments described in this specification are only for explaining the application, instead of intending to limit the application.

In the description herein, it should be noted that, unless otherwise specified, a numeric range described with the term "above" or "below" includes the lower or upper limit itself, and "more" in "one or more" means two or more.

The above summary of the present application is not intended to describe each disclosed embodiment or every implementation in this application. The following description illustrates exemplary embodiments more specifically. In many places throughout the application, guidance is provided through a series of examples, which can be used in various combinations. In each instance, the enumeration is only a representative group and should not be interpreted as exhaustive.

## Composite current collector

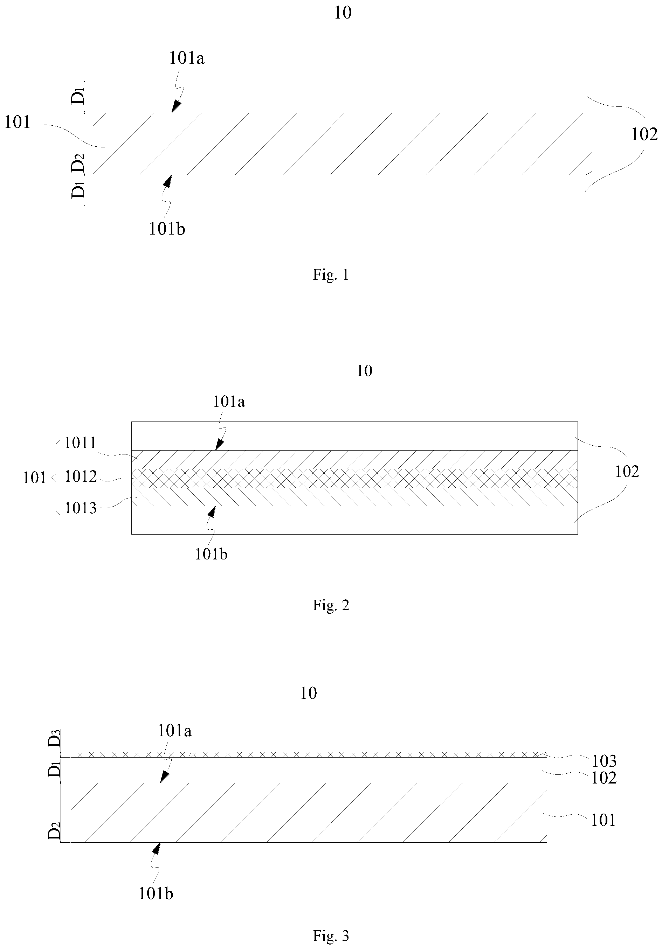

In the first aspect, the embodiments of the present application provide a composite current collector 10. Fig. 1 is a schematic structural diagram of a composite current collector 10 as an embodiment of the present application. Referring to Fig. 1, the composite current collector 10 includes an organic support layer 101 and a metal conductive layer 102 that are laminated.

The organic support layer 101 has a first surface 101a and a second surface 101b opposite in its thickness direction, and the metal conductive layers 102 are disposed on the first surface 101a and the second surface 101b of the organic support layer 101.

It is understandable that alternatively the metal conductive layer 102 may be disposed on either of the first surface 101a and the second surface 101b of the organic support layer 101. For example, the metal conductive layer 102 is disposed on the first surface 101a of the organic support layer 101. Apparently, the metal conductive layer 102 may be disposed on the second surface 101b of the organic support layer 101.

The composite current collector 10 has a brittleness parameter C of $0.01 \leq C \leq 0.5$.

As used herein, the brittleness parameter C of the composite current collector 10 may be obtained according to formula 1:

$$C = (T_1 \times D_1)/(T_2 \times D_2) \quad \text{formula 1}$$

wherein $T_1$ is a tensile strength of the metal conductive layer 102, $D_1$ is a thickness of the metal conductive layer 102, $T_2$ is a tensile strength of the organic support layer 101, $D_2$ is a thickness of the organic support layer 101.

The formula 1 is applicable to the composite current collector 10 where the metal conductive layer 102 is disposed on at least one surface of the organic support layer 101, more applicable to the composite current collector 10 where the metal conductive layer 102 is respectively disposed on two opposite surfaces of the organic support layer 101, and especially applicable to the composite current collector 10 where the metal conductive layer 102 is respectively disposed on two opposite surfaces of the organic support layer 101 and the metal conductive layers 102 on both sides have equal or substantially equal thickness. The aforementioned "substantially equal" means that the metal conductive layers 102 on both sides have a thickness difference of not more than 10%, for example, not more than 10%, 9%, 8%, 7%, 6%, 5%, 3%, 2%, 1%.

In some embodiments, the aforementioned "thickness $D_1$ of the metal conductive layer 102" refers to the thickness of the metal conductive layer 102 on a single side of the organic support layer 101. In some other embodiments, the aforementioned "thickness $D_1$ of the metal conductive layer 102" refers to an average thickness of the metal conductive layers 102 on both sides of the organic support layer 101, that is, half of a sum of thicknesses of the metal conductive layers 102 on both sides of the organic support layer 101.

For example, for the composite current collector 10 where the metal conductive layer 102 is disposed on a single side of the organic support layer 101, the "thickness $D_1$ of the metal conductive layer 102" refers to the thickness of the metal conductive layer 102 on the single side of the organic support layer 101. For the composite current collector 10 where the metal conductive layer 102 is disposed on each of the two opposite surfaces of the organic support layer 101 and the metal conductive layers 102 on both sides have equal or substantially equal thickness, the "thickness $D_1$ of the metal conductive layer 102" refers to the thickness of the metal conductive layer 102 on the single side of the organic support layer 101 or the average thickness of the metal conductive layers 102 on both sides of the organic support layer 101. For the composite current collector 10 where the metal conductive layer 102 is disposed on each of the two opposite surfaces of the organic support layer 101 and the metal conductive layers 102 on both sides have a thickness difference of more than 10%, the "thickness $D_1$ of the metal conductive layer 102" refers to the average thickness of the metal conductive layers 102 on both sides of the organic support layer 101. This can better apply the formula 1.

The tensile strength $T_1$ of the metal conductive layer 102 and the tensile strength $T_2$ of the organic support layer 101 can be measured by instruments and methods well-known in the art. The tensile strength $T_1$ of the metal conductive layer 102 and the tensile strength $T_2$ of the organic support layer 101 can be measured by the same method. The measurement of the tensile strength $T_2$ of the organic support layer 101 is taken as an example for description. The organic support layer 101 is cut into a strip sample, such as a sample with a width of 15 mm and a length of 150 mm, which is then loaded the sample into two opposite clamps of the universal tensile tester with an initial length set to 50 mm; a tensile test is performed at a tensile rate of 5 mm/min until the sample breaks; and the maximum tensile force F when the sample breaks is recorded to calculate the tensile strength T of the organic support layer 101 according to $T_2 = F/S$, where S is initial cross-sectional area of the sample. S can be calculated by the product of the width and thickness of the sample. The thickness of the sample is the thickness $D_2$ of the organic support layer 101.

The thickness $D_1$ of the metal conductive layer 102 and the thickness $D_2$ of the organic support layer 101 can be measured by instruments and methods known in the art, for example, by a ten-thousandth micrometer.

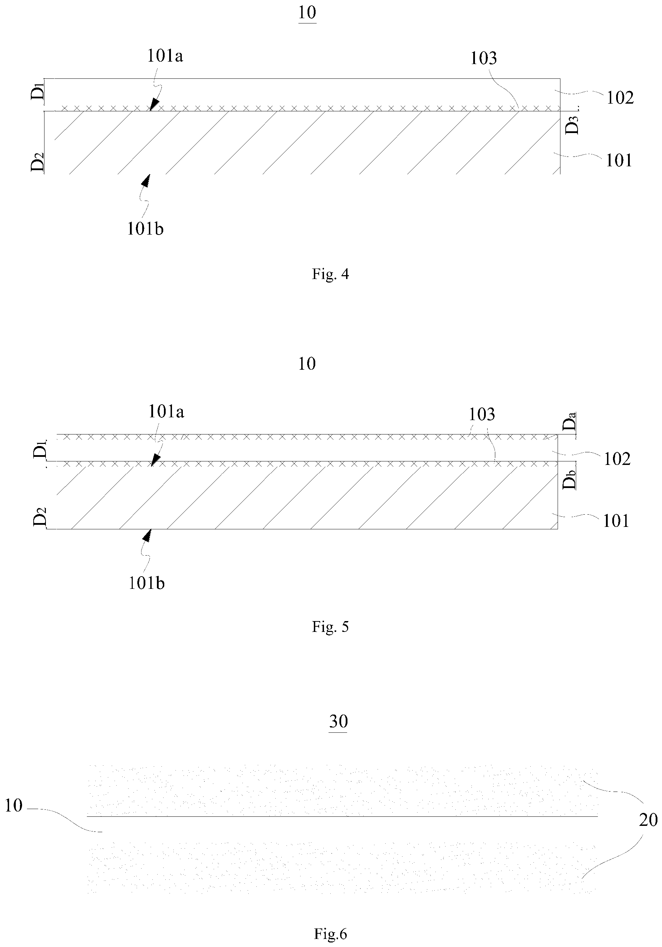

The composite current collector 10 of the embodiments of the present application includes an organic support layer 101 and an metal conductive layer 102 disposed on the organic support layer 101, and the brittleness parameter C of the composite current collector 10 is $0.01 \leq C \leq 0.5$. Therefore, the composite current collector 10 has appropriate toughness, which ensures that the composite current collector has relatively high mechanics and mechanical properties, and can withstand certain deformation without breakage during the production and working process of an electrochemical device, which is beneficial to improving the processability property of the composite current collector 10 and its stability during use, and effectively prevents it from breaking or cracking during its preparation and use. Thus, the yields of the composite current collector 10 and the electrode plate 30 as shown in Fig. 6 and electrochemical device using the same during preparation and their reliability during use the present application are significantly improved.

The composite current collector 10 is not prone to breaking and cracking during the production and working process of the electrochemical device, which in one aspect ensures electrical conductivity and current collecting performance of the composite current collector 10, and in another aspect prevents the active material layer 20 as shown in Fig. 6 from breaking or cracking, and maintains the continuity of its internal conductive network, so as to ensure effective performance of the active material layer. Thus, using the composite current collector 10 of the embodiments of the present application is beneficial to prolonging the service life of the electrochemical device.

At the same time, the brittleness parameter C of the composite current collector 10 being within the above range also ensures that the composite current collector 10 has good electrical conductivity and current collecting performance and is beneficial to enabling the electrode plate 30 and the electrochemical device to have low impedance, and reducing polarization of the battery, so that the electrochemical device has relatively high electrochemical performance, and the electrochemical device has relatively high rate performance and cycle performance.

In addition, because the density of the organic support layer 101 is smaller than that of a metal, this is beneficial to reducing the weight of the electrochemical device, thereby further improving the energy density of the electrochemical device.

In some optional embodiments, the upper limit of the brittleness parameter C of the composite current collector 10 may be selected from 0.5, 0.48, 0.45, 0.42, 0.4, 0.38, 0.36, 0.35, 0.32, 0.3, 0.28 and 0.25, and the lower limit may be selected from 0.01, 0.05, 0.08, 0.1, 0.12, 0.15, 0.17, 0.19, 0.2 and 0.22.

Preferably, the brittleness parameter C of the composite current collector 10 is from 0.1 to 0.3. The composite current collector 10 can better exert the above-mentioned effects. In practical applications, the lower the brittleness parameter C, generally the larger the thickness of the organic support layer 101 or the smaller the thickness of the metal conductive layer 102. A larger thickness of the organic support layer 101 is not conducive to improving the energy density of the electrochemical device, and a smaller thickness of the metal conductive layer 102 will affect the current carrying capacity of the composite current collector 10 and the electrode plate 30. The brittleness parameter C of the composite current collector 10 is preferably from 0.1 to 0.3, which can better improve the energy density of the electrochemical device and ensure that the composite current collector 10 and the electrode plate 30 have a higher current carrying capacity. The electrochemical device using the composite current collector 10 has relatively good comprehensive performance.

In the composite current collector 10 of the embodiments of the present application, the tensile strength $T_1$ of the metal conductive layer 102 is preferably 150 MPa $\leq$ T1 $\leq$ 500 MPa, and more preferably 200 MPa $\leq$ T1 $\leq$ 350 MPa. The tensile strength of the metal conductive layer 102 is within the above range, which can be more conducive to allowing the composite current collector 10 have higher mechanical properties, reducing breaking or cracking, and improving the service life of the electrochemical device; and which may ensure that the composite current collector 10 has good mechanics and mechanical properties, and current conducting and collecting properties, thereby improving rate performance and cycle performance of the electrochemical device.

In the composite current collector 10 of the embodiments of the present application, the thickness $D_1$ of the metal conductive layer 102 is preferably 30 nm $\leq D_1 \leq$ 3 $\mu$m.

In the composite current collector 10 of the embodiments of the present application, the relatively thin metal conductive layer 102 is disposed on the surface of the organic support layer 101, which can significantly reduce the weight of the composite current collector 10 as compared to traditional metal current collectors (such as an aluminum foil, a copper foil and the like), thereby reducing the weight of the electrochemical device and significantly increasing the energy density of the electrochemical device.

In addition, the thickness $D_1$ of the metal conductive layer 102 is 30 nm $\leq$ D1 $\leq$ 3 $\mu$m, which can lead to the metal conductive layer 102 having relatively high electrical conductivity, which in turn beneficially enables the composite current collector 10 to have relatively high electrical conductivity and current collecting performance, thereby improving the performance of the electrochemical device. Moreover, with the aforementioned thickness $D_1$, the metal conductive layer 102 is not prone to breaking during processing and use, so that the composite current collector 10 has relatively high breaking toughness and relatively good mechanical stability and working stability. Furthermore, when the thickness $D_1$ of the metal conductive layer 102 is within the above-mentioned range, the metal conductive layer 102 produces smaller burr in the case of abnormal situations such as nail penetration in the electrochemical device, thereby reducing the risk of the generated metal burr contacting with the electrode and further improving safety performance of the electrochemical device.

In some optional embodiments, the upper limit of the thickness $D_1$ of the metal conductive layer 102 can be selected from 3$\mu$m, 2.5$\mu$m, 2$\mu$m, 1.8$\mu$m, 1.5$\mu$m, 1.2$\mu$m, 1$\mu$m, 900nm, 750nm, 450nm, 250nm, and 100nm, and the lower limit can be selected from 1.6$\mu$m, 1$\mu$m, 800nm, 600nm, 400nm, 300nm, 150nm, 100nm, 80nm, and 30nm.

Further preferably, the thickness $D_1$ of the metal conductive layer 102 is 300 nm $\leq D_1 \leq$ 2 $\mu$m. More preferably, the thickness $D_1$ of the metal conductive layer 102 is 500 nm $\leq D_1 \leq$ 1.5 $\mu$m. More preferably, the thickness $D_1$ of the metal conductive layer 102 is 800 nm $\leq D_1 \leq$ 1.2 $\mu$m.

In the composite current collector 10 of the embodiments of the present application, the metal conductive layer 102 may include one or more of aluminum, aluminum alloy, nickel, nickel alloy, copper, copper alloy, titanium and silver.

In some embodiments, the metal conductive layer 102 includes aluminum or aluminum alloy and a weight percentage content of aluminum element in the aluminum alloy is preferably 80wt% or more, and more preferably 90wt% or more.

For example, the metal conductive layer 102 includes copper or copper alloy and a weight percentage content of copper element in the copper alloy is preferably 80wt% or more, and more preferably 90wt% or more.

In the composite current collector 10 of the embodiments of the present application, the tensile strength T of the organic support layer 101 is preferably 100 MPa $\leq T_2 \leq$ 400 MPa, and more preferably 150 MPa $\leq T_2 \leq$ 300 MPa. The tensile strength of the organic support layer 101 within the above range is beneficial to enabling the composite current collector 10 to have relatively high mechanics properties, so that the composite current collector 10 is not prone to breaking or cracking. In addition, the organic support layer 101 will not be excessively extended or deformed, thereby effectively preventing the metal conductive layer 102 from breaking or cracking, enabling relatively high bonding strength between the organic support layer 101 and the metal conductive layer 102, and reducing the peeling of the metal conductive layer 102. Therefore, using the composite current collector 10 is beneficial to improving the service life and cycle performance of the electrochemical device.

When the tensile strength of the organic support layer 101 is within the above range, the organic support layer 101 may function as better supporting the metal conductive layer 102.

In the composite current collector 10 of the embodiments of the present application, the organic support layer 101 has a Young's modulus E, preferably $\geq$ 2 Gpa, which enables the organic support layer 101 to have rigidity, so that it can not only better support the metal conductive layer 102 to ensure the overall strength of the composite current collector 10, but also it will not be excessively extended or deformed during the processing of the composite current collector 10, more effectively prevents the organic support layer 101 and the metal conductive layer 102 from breaking, and enables higher bonding strength between the organic support layer 101 and the metal conductive layer 102 without delamination of the metal conductive layer 102. Thus, the mechanical stability and working stability of the composite current collector 10 are improved, thereby improving the performance of the electrochemical device.

Further, the Young's modulus E of the organic support layer 101 is preferably $2\,GPa \le E \le 20\,GPa$, such as 2 GPa, 3 GPa, 4 GPa, 5 GPa, 6 GPa, 7 GPa, 8 GPa, 9 GPa, 10 GPa, 11 GPa, 12 GPa, 13 GPa, 14 GPa, 15 GPa, 16 GPa, 17 GPa, 18 GPa, 19 GPa, or 20 GPa. This enables the organic support layer 101 to have appropriate rigidity and appropriate toughness, and ensures winding flexibility of the organic support layer 101 and the composite current collector 10 using the organic support layer 101 during processing.

The Young's modulus E of the organic support layer 101 can be measured by methods known in the art. As an example, the organic support layer 101 is cut into a 15 mm × 200 mm sample, thickness h ($\mu$m) of the sample is measured with a ten-thousandth micrometer, a tensile test is performed with Go-tech tension tester at normal temperature and pressure (25°C, 0.1 MPa), an initial position is set such that the sample between the clamps is 50 mm long, the sample is stretched at a speed of 5 mm/min, load L (N) from stretching to break and the clamp displacement y (mm) are recorded, then stress $\varepsilon$ (GPa) = L/ (15 × h), strain $\eta$ = y/ 50, a stress-strain curve is drawn, and the curve of an initial linear region is selected, wherein the slope of this curve is the Young's modulus E.

In the composite current collector 10 of the embodiments of the present application, the thickness $D_2$ of the organic support layer 101 is preferably $1\,\mu m \le D_2 \le 30\,\mu m$. The thickness $D_2$ of the organic support layer 101 is $1\mu m$ or above, which enables the organic support layer 101 to have relatively high mechanical strength, not to be easy to break during processing and use, and to support and protect the metal conductive layer 102 well, thereby improving the mechanical stability and working stability of the composite current collector 10. The thickness $D_2$ of the organic support layer 101 is 30um or less, which enables the electrochemical device to have relatively small size and relatively low weight, thereby increasing volumetric energy density and gravimetric energy density of the electrochemical device.

In some optional embodiments, the upper limit of the thickness $D_2$ of the organic support layer 101 may be 30 $\mu$m, 25 $\mu$m, 20 $\mu$m, 18 $\mu$m, 15 $\mu$m, 12 $\mu$m, 10 $\mu$m or 8 $\mu$m, and the lower limit may be $1\mu m$, 1.5 $\mu$m, 2 $\mu$m, 3 $\mu$m, 4 $\mu$m, 5 $\mu$m, 6 $\mu$m, 7 $\mu$m, 9 $\mu$m or 16 $\mu$m.

Further preferably, the thickness $D_2$ of the organic support layer 101 is $1\,nm \le D_2 \le 20\,\mu m$. More preferably, the thickness $D_2$ of the organic support layer 101 is $1\,\mu m \le D_2 \le 15\,\mu m$. More preferably, the thickness $D_2$ of the organic support layer 101 is $2\,\mu m \le D_2 \le 10\,\mu m$. More preferably, the thickness $D_2$ of the organic support layer 101 is $2\,\mu m \le D_2 \le 8\,\mu m$, more preferably, $2\,\mu m \le D_2 \le 6\,\mu m$.

In the composite current collector 10 of the embodiments of the present application, the organic support layer 101 adopts one or more of polymer materials and polymer-based composite materials. For example, the polymer materials are one or more of polyamides, polyimides, polyesters, polyolefins, polyynes, siloxane polymers, polyethers, polyols, polysulfones, polysaccharide polymers, amino acid polymers, polysulfur nitrides, aromatic ring polymers, aromatic heterocyclic polymers, epoxy resin, phenolic resin, derivatives thereof, cross linkers thereof, and copolymers thereof.

Furthermore, for example, the polymer materials are one or more of polycaprolactam (commonly known as nylon 6), polyhexamethylene adipamide (commonly known as nylon 66), polyparaphenylene terephthalamide (PPTA), polyisophthaloyl metaphenylene diamine (PMIA), polyethylene terephthalate (PET), polybutylene terephthalate (PBT), polyethylene naphthalate (PEN), polycarbonate (PC), polyethylene (PE), polypropylene (PP), polypropylene (PPE), polyvinyl alcohol (PVA), polystyrene (PS), polyvinyl chloride (PVC), polyvinylidene fluoride (PVDF), polytetrafluoroethylene (PTEE), poly(sodium styrene sulfonate) (PSS), polyacetylene (PA), silicone rubber, polyoxymethylene (POM), polyphenylene ether (PPO), polyphenylene sulfide (PPS), polyethylene glycol (PEG), cellulose, starch, protein, polyphenylene, polypyrrole (PPy), polyaniline (PAN), polythiophene (PT), polypyridine (PPY), acrylonitrile-butadiene-styrene copolymer (ABS), derivatives thereof, cross linkers thereof, and copolymers thereof.

As the above-mentioned polymer-based composite materials, they may include the above-mentioned polymer materials and additives. The additives may include one or more of metallic materials and inorganic non-metallic materials.

The above-mentioned metal material additives for example are one or more of aluminum, aluminum alloy, copper, copper alloy, nickel, nickel alloy, titanium, titanium alloy, iron, iron alloy, silver, and silver alloy.

The above-mentioned inorganic non-metallic material additives are, for example, one or more of carbon-based materials, alumina, silicon dioxide, silicon nitride, silicon carbide, boron nitride, silicate, and titanium oxide, and also are, for example, one or more of glass materials, ceramics materials and ceramic composite materials. The carbon-based material additives are, for example, one or more of graphite, superconducting carbon, acetylene black, carbon black, Ketjen black, carbon dots, carbon nanotubes, graphene, and carbon nanofibers.

As the above-mentioned additives, they may be metal-coated carbon-based materials, such as one or more of nickel-coated graphite powder and nickel-coated carbon fibers.

Preferably, the organic support layer 101 adopts one or more of insulating polymer materials and insulating polymer-based composite materials. The organic support layer 101 has a relatively high volume resistivity, which is beneficial to improving the safety performance of the electrochemical device.

Further, the organic support layer 101 includes one or more of polyethylene terephthalate (PET), polybutylene terephthalate (PBT), polyethylene naphthalate (PEN), poly(sodium styrene sulfonate) (PSS) and polyimide (PI).

In the composite current collector 10 of the embodiments of the present application, the organic support layer 101 may be of a single-layer structure, or a composite layer structure of two or more layers, such as two layers, three layers, or four layers.

Fig. 2 is a schematic structural diagram of another composite current collector 10 according to an embodiment of the present application. Referring to Fig. 2, the organic support layer 101 is of a composite layer structure formed by laminating a first sublayer 1011, a second sublayer 1012, and a third sublayer 1013. The organic support layer 101 of the composite layer structure has a first surface 101a and a second surface 101b opposite to each other, and the metal conductive layers 102 are laminated on the first surface 101a and the second surface 101b of the organic support layer 101. Apparently, the metal conductive layer 102 may be disposed only on the first surface 101a of the organic support layer 101, or only on the second surface 101b of the organic support layer 101.

When the organic support layer 101 is of a composite layer structure of two or more layers, materials of the sublayers may be the same or different.

The inventors found through intensive research that, especially when the thickness $D_2$ of the organic support layer 101 is not more than 10 $\mu$m, and more particularly not more than 8 $\mu$m, the brittleness parameter of the composite current collector 10 is a more critical parameter for the mechanics and mechanical properties of the composite current collector 10, which will affect the processability, preparation yield, use reliability, etc. of the composite current collector 10 to a greater extent.

The composite current collector 10 according to the embodiments of the present application further optionally includes a protective layer 103. Referring to Figs. 3 to 5, the metal conductive layer has two opposite surfaces in its thickness direction, and the protective layer 103 is disposed on either or both of two opposite surfaces of either metal conductive layer 102 to protect the metal conductive layer 102, prevent the metal conductive layer 102 from chemical corrosion or mechanical damage, and ensure the working stability and service life of the composite current collector 10, which is beneficial to enabling the electrochemical device to have relatively high safety performance and electrochemical performance. In addition, the protective layer 103 can also increase the strength of the composite current collector 10.

It is understandable that, Figs. 3 to 5 show the metal conductive layer 102 on a single side of the organic support layer 101, and the protective layer(s) 103 on either or both of two opposite surfaces of the metal conductive layer 102 in its thickness direction. However, in other embodiments, the metal conductive layers 102 may be respectively disposed on two opposite surfaces of the organic support layer 101, the protective layer(s) 103 may be disposed on either or both of two opposite surfaces of each metal conductive layer 102 in its thickness direction, or the protective layer(s) 103 may be disposed on either or both of two opposite surfaces of two metal conductive layers 102 in their thickness direction.

The protective layer 103 includes one or more of metal, metal oxide, and conductive carbon.

For example, the above-mentioned metal may be one or more of nickel, chromium, nickel-based alloy, and copper-based alloy. The above-mentioned nickel-based alloy is an alloy formed by adding one or more other elements to pure nickel as a matrix, and is preferably a nickel-chromium alloy. The nickel-chromium alloy is an alloy formed of metallic nickel and metallic chromium. Optionally, a weight ratio of nickel to chromium in the nickel-chromium alloy is from 1: 99 to 99: 1, such as 9: 1. The above-mentioned copper-based alloy is an alloy formed by adding one or more other elements to pure copper as a matrix, and is preferably a nickel-copper alloy. Optionally, a weight ratio of nickel to copper in the nickel-copper alloy is from 1: 99 to 99: 1, such as 9: 1.

The above-mentioned metal oxide is, for example, one or more of aluminum oxide, cobalt oxide, chromium oxide, and nickel oxide.

The above-mentioned conductive carbon is, for example, one or more of graphite, superconducting carbon, acetylene black, carbon black, Ketjen black, carbon dots, carbon nanotubes, graphene and carbon nanofibers, and further include one or more of carbon black, carbon nanotubes, acetylene black, and graphene.

As some examples, referring to Fig. 3, the composite current collector 10 includes an organic support layer 101, an metal conductive layer 102 and a protective layer 103 that are laminated. The organic support layer 101 has a first surface 101a and a second surface 101b opposite in its thickness direction, the metal conductive layer 102 is disposed on at least one of the first surface 101a and the second surface 101b of the organic support layer 101, and the protective layer 103 is disposed on a surface of the metal conductive layer 102 facing away from the organic support layer 101.

The protective layer 103 disposed on the surface of the metal conductive layer 102 facing away from the organic support layer 101 (referred to as an upper protective layer for short) protects the metal conductive layer 102 from chemical corrosion and mechanical damage, also improves the interface between the composite current collector 10 and the active material layer 20 and improves the bonding force between the composite current collector 10 and the active material layer 20. The above effects can be further improved if the upper protective layer is a metal protective layer or metal oxide protective layer.

Further, the upper protective layer of the composite current collector 10 is preferably a metal oxide protective layer, for example, aluminum oxide, cobalt oxide, nickel oxide, chromium oxide, etc. The metal oxide protective layer has high hardness and mechanical strength, a larger specific surface area, and better corrosion resistance, and can better protect the metal conductive layer 102.

When the composite current collector 10 is used as a negative electrode current collector, the upper protective layer can be a metal protective layer, and the metal protective layer can improve conductivity of the composite current collector 10, reduce polarization of batteries, reduce the risk of lithium precipitation in the negative electrode, and increase cycle performance and safety performance of the lithium ion secondary battery. More preferably, the metal protective layer is a double protective layer, that is, a composite layer formed by a metal protective layer and a metal oxide protective layer, wherein preferably, the metal protective layer is disposed on the surface of the conductive layer 102 facing away from the organic support layer 101, and the metal oxide protective layer is disposed on the surface of the metal protective layer facing away from the organic support layer 101, so that the conductivity and corrosion resistance of the negative electrode current collector, as well as the interface between the metal conductive layer 102 and the negative electrode active material layer can be improved at the same time, thereby obtaining a negative electrode current collector with better comprehensive performance.

When the composite current collector 10 is used as a positive electrode current collector, the upper protective layer is preferably a metal oxide protective layer. In addition to the above technical effects, the metal oxide protective layer can better improve the nail penetration safety performance of the positive electrode current collector.

As some other examples, referring to Fig. 4, the composite current collector 10 includes a organic support layer 101, an metal conductive layer 102 and a protective layer 103 that are laminated. The organic support layer 101 has a first surface 101a and a second surface 101b opposite in its thickness direction, the metal conductive layer 102 is laminated on at least one of the first surface 101a and the second surface 101b of the organic support layer 101, and the protective layer 103 is laminated on the surface of the metal conductive layer 102 facing toward the organic support layer 101.

On the surface of the metal conductive layer 102 facing toward the organic support layer 101 is disposed the protective layer 103 (referred to as a lower protective layer for short), and the lower protective layer protects the metal conductive layer 102 from chemical corrosion and mechanical damage. Meanwhile, the lower protective layer can also improve the bonding force between the metal conductive layer 102 and the organic support layer 101, prevent the metal conductive layer 102 from separating from the organic support layer 101, and improve the supporting and protecting effect on the metal conductive layer 102.

Optionally, the lower protective layer is a metal oxide or metal protective layer. The metal oxide protective layer has relatively high corrosion resistance and large specific surface area, which can further improve the interface bonding force between the metal conductive layer 102 and the organic support layer 101, so that the lower protective layer can better protect the metal conductive layer 102 to improve the performance of the lithium ion secondary battery. In addition, the metal oxide protective layer has higher hardness and better mechanical strength, which is more beneficial to improving the strength of the composite current collector 10. The metal protective layer can protect the metal conductive layer 102 from chemical corrosion and mechanical damage, but also improve the electrical conductivity of the composite current collector 10, reduce polarization of batteries, reduce the risk of lithium precipitation in the negative electrode, and increase cycle performance and safety performance of the lithium ion secondary battery. When the composite current collector 10 is used a positive electrode current collector, the lower protective layer is preferably a metal oxide protective layer. When the composite current collector 10 is used a negative electrode current collector, the lower protective layer is preferably a metal protective layer.

As still other examples, referring to Fig. 5, the composite current collector 10 includes an organic support layer 101, a metal conductive layer 102 and a protective layer 103 that are laminated. The organic support layer 101 has a first surface 101a and a second surface 101b opposite in its thickness direction, the metal conductive layer 102 is laminated on at least one of the first surface 101a and the second surface 101b of the organic support layer 101, and the protective layer 103 is disposed on the surface of the metal conductive layer 102 facing away the organic support layer 101 and on the surface of the metal conductive layer 102 facing toward the organic support layer 101.

The protective layer 103 is disposed on both surfaces of the metal conductive layer 102 to more fully protect the metal conductive layer 102, so that the composite current collector 10 has relatively high comprehensive performance.

It is understandable that the protective layers 103 on the two surfaces of the metal conductive layer 102 may be made of the same or different materials, and may have the same or different thicknesses. Preferably, the thickness $D_3$ of the protective layer 103 is $1\,nm \le D_3 \le 200\,nm$, and $D_3 \le 0.1\,D_1$. If the protective layer 103 is too thin, it will not be sufficient to protect the metal conductive layer 102; if it is too thick, the energy density of the electrochemical device will be reduced.

In some embodiments, the upper limit of the thickness $D_3$ of the protective layer 103 may be 200 nm, 180 nm, 150 nm, 120 nm, 100 nm, 80 nm, 60 nm, 55 nm, 50 nm, 45 nm, 40 nm, 30 nm or 20 nm, and the lower limit may be 1 nm, 2 nm, 5 nm, 8nm, 10 nm, 12 nm, 15 nm or 18nm.

More preferably, the thickness $D_3$ of the protective layer 103 is $5\,nm \le D_3 \le 200\,nm$, more preferably, is $10\,nm \le D_3 \le 200\,nm$.

The above-mentioned "thickness $D_3$ of the protective layer 103" refers to the thickness of the protective layer 103 on a single side of the conductive layer 102. That is, the thickness $D_a$ of the upper protective layer is $1\,nm \le D_a \le 200\,nm$ and $D_a \le 0.1D_1$; further, $5\,nm \le D_a \le 200\,nm$; and furthermore, $10\,nm \le D_a \le 200\,nm$. The thickness $D_b$ of the lower protective layer is $1\,nm \le D_b \le 200\,nm$ and $D_b \le 0.1D1$; further, $5\,nm \le D_b \le 200\,nm$; and furthermore, $10\,nm \le D_b \le 200\,nm$.

When the protective layers 103 are disposed on the two surfaces of the metal conductive layer 102, that is, when the composite current collector 10 includes the upper protective layer and the lower protective layer, preferably, $D_a > D_b$, which enables the upper protective layer and the lower protective layer to protect the metal conductive layer 102 cooperatively from chemical corrosion and mechanical damage, and enables the electrochemical device to have relatively high energy density. More preferably, $0.5\,D_a \leq D_b \leq 0.8\,D_a$, as a result of which the cooperative protection effect of the upper protective layer and the lower protective layer can be better exerted.

It can be understood that the influence of the setting of the protective layer 103 on the brittleness parameter C of the composite current collector 10 is negligible.

In the composite current collector 10 of the embodiments of the present application, the metal conductive layer 102 is, for example, formed on the organic support layer 101 by at least one means of mechanical rolling, bonding, vapor deposition, chemical plating, and electroplating. Among them, vapor deposition and electroplating are preferred, that is, the metal conductive layer 102 is a vapor deposition layer or an electroplating layer. The metal conductive layer 102 is formed on the organic support layer 101 by means of vapor deposition or electroplating, which enables the metal conductive layer 102 to have better tensile strength $T_1$, enables relatively high bonding force between the metal conductive layer 102 and the organic support layer 101, and improves the performance of the composite current collector 10.

The above-mentioned vapor deposition is preferably physical vapor deposition. The physical vapor deposition is preferably at least one of evaporation and sputtering, wherein the evaporation is preferably at least one of vacuum evaporation, thermal evaporation and electron beam evaporation, and the sputtering is preferably magnetron sputtering.

As an example, the metal conductive layer 102 can be formed by vacuum evaporation including the step of placing the organic support layer 101 after surface cleaning treatment in a vacuum evaporation chamber, melting and evaporating a metal wire in the metal evaporation chamber at a high temperature from 1300°C to 2000°C, and passing the evaporated metal through a cooling system in the vacuum evaporation chamber and then depositing the evaporated metal on the organic support layer 101 to form the metal conductive layer 102.

When the protective layer 103 is present, it can be formed on the metal conductive layer 102 by at least one of vapor deposition, in-situ formation and coating. The vapor deposition may be the aforementioned vapor deposition. The in-situ formation is preferably in-situ passivation, that is, a method of forming a metal oxide passivation layer in situ on a metal surface. The coating is preferably at least one of roll coating, extrusion coating, knife coating, and gravure coating.

Preferably, the protective layer 103 is formed on the metal conductive layer 102 by at least one means of vapor deposition and in-situ formation, which enables relatively high bonding force between the metal conductive layer 102 and the protective layer 103, thereby better protecting the composite current collector 10 by the protective layer 102 and ensuring good working performance of the composite current collector 10.

When the protective layer 103 (that is, the lower protective layer) is disposed between the metal conductive layer 102 and the organic support layer 101, the lower protective layer may be formed on the organic support layer 101 first, and then the metal conductive layer 102 is formed on the lower protective layer. The lower protective layer may be formed on the organic support layer 101 by at least one means of vapor deposition and coating, and preferably by vapor deposition. The metal conductive layer 102 may be formed on the lower protective layer by at least one means of mechanical rolling, bonding, vapor deposition and chemical plating, and preferably by vapor deposition.

The composite current collector 10 of any of the foregoing embodiments can be used as either or both of the positive electrode current collector and the negative electrode current collector.

When the composite current collector 10 is used as a positive electrode current collector, the metal conductive layer 102 may include one or more of aluminum, aluminum alloy, nickel, nickel alloy, titanium, and silver, for example, aluminum or aluminum alloy. The weight percentage of the aluminum element in the aforementioned aluminum alloy is preferably 80% by weight or more, more preferably 90% by weight or more.

When the composite current collector 10 is used as a negative electrode current collector, the metal conductive layer 102 may include one or more of copper, copper alloy, nickel, nickel alloy, titanium, and silver, such as copper or copper alloy. The weight percentage of the copper element in the aforementioned copper alloy is preferably 80% by weight or more, and more preferably 90% by weight or more.

## Electrode plate

In the second aspect, the embodiments of the present application provide an electrode plate 30. Fig. 6 is a schematic structural diagram of an electrode plate 30 according to an embodiment of the present application. Referring to Fig. 6, the electrode plate 30 includes a composite current collector 10 and an active material layer 20 that are laminated, wherein the composite current collector 10 is the composite current collector according to the first aspect of the present application.

Since the electrode plate 30 of the embodiments of the present application adopts the composite current collector 10 according to the first aspect of the embodiments of the present application, it has relatively high mechanics, relatively high preparation yield, relatively high use safety and reliability, low weight and relatively high electrochemical performance.

As an example, referring to Fig. 6, the electrode plate 30 includes a composite current collector 10 and active material layers 20 that are laminated, the composite current collector 10 has two opposite surfaces in its thickness direction, and the active material layer 20 is laminated on the two surfaces of the composite current collector 10.

It can be understood that the active material layer 20 may also be laminated on either of the two surfaces of the composite current collector 10.

The electrode plate 30 of the embodiments of the present application can be used as any one or both of the positive electrode plate and the negative electrode plate.

When the electrode plate 30 of the embodiments of the present application is used as a positive electrode plate, the active material layer 20, i.e. positive electrode active material layer may adopt a positive electrode active material known in the art that can achieve reversible intercalation/deintercalation of active ions, which is not limited in this application.

For example, the positive electrode active material for lithium-ion secondary batteries may be one or more of lithium transition metal composite oxides, and composite oxides obtained by adding other transition metals or non-transition metals or non-metals to lithium transition metal composite oxides. The transition metals may be one or more of Mn, Fe, Ni, Co, Cr, Ti, Zn, V, Al, Zr, Ce, and Mg.

As an example, the positive electrode active material may be selected from one or more of lithium cobalt oxide, lithium nickel oxide, lithium manganese oxide, lithium nickel manganese oxide, lithium nickel cobalt manganese oxide, lithium nickel cobalt aluminum oxide, and lithiumcontaining phosphate of an olivine structure. For example, the lithium transition metal composite oxides are one or more of $LiMn_2O_4$, $LiNiO_2$, $LiCoO_2$, $LiNi_{1-y}Co_yO_2$, $(0 < y < 1)$, $LiNi_aCo_bAl_{1-a-b}O_2$ $(0 < a < 1, 0 < b < 1, 0 < a+b < 1)$, $LiMn_{1-m-n}NimCo_nO_2$ $(0 < m < 1, 0 < n < 1, 0 < m+n < 1)$, $LiMPO_4$ (M may be one or more of Fe, Mn, and Co), and $Li_3V_2(PO_4)_3$.

Optionally, the positive electrode active material layer may further include a binder. This application does not limit the type of the binder. As an example, the binder is one or more of styrene-butadiene rubber (SBR), water-based acrylic resin, carboxymethyl cellulose (CMC), polyvinylidene fluoride (PVDF), polytetrafluoroethylene (PTFE), ethylene-vinyl acetate copolymer (EVA), polyvinyl alcohol (PVA), and polyvinyl butyral (PVB).

Optionally, the positive electrode active material layer may further include a conductive agent. This application does not limit the type of the conductive agent. As an example, the conductive agent is one or more of graphite, superconducting carbon, acetylene black, carbon black, Ketjen black, carbon dots, carbon nanotubes, graphene, and carbon nanofibers.

When the electrode plate 30 of the embodiments of the present application is used as a negative electrode plate, the active material layer 20, i.e. negative electrode active material layer may adopt a negative electrode active material known in the art that can achieve reversible intercalation/deintercalation of active ions, which is not limited in this application.

For example, the negative electrode active material for lithium-ion secondary batteries may be one or more of metallic lithium, natural graphite, artificial graphite, mesocarbon microbeads (MCMB), hard carbon, soft carbon, silicon, silicon-carbon composite, SiO, Li-Sn alloy, Li-Sn-O alloy, Sn, SnO, $SnO_2$, lithium titanate of a spinel structure, and Li-Al alloy.

Optionally, the active material layer 20 may further include a conductive agent. This application does not limit the type of the conductive agent. As an example, the conductive agent is one or more of graphite, superconducting carbon, acetylene black, carbon black, Ketjen black, carbon dots, carbon nanotubes, graphene, and carbon nanofibers.

Optionally, the electrode active material layer 20 may further include a binder. This application does not limit the type of the binder. As an example, the binder is one or more of styrene-butadiene rubber (SBR), water-based acrylic resin, carboxymethyl cellulose (CMC), polyvinylidene fluoride (PVDF), polytetrafluoroethylene (PTFE), ethylene-vinyl acetate copolymer (EVA), polyvinyl alcohol (PVA), and polyvinyl butyral (PVB).

The electrode plate 30 can be prepared according to a conventional method in the art, such as a coating method. As an example, the active material and optional conductive agent and binder are dispersed in a solvent which may be NMP or deionized water to form a uniform electrode slurry; the electrode slurry is applied to the composite current collector 10, and the electrode plate 30 is obtained after steps including drying and so on.

**Electrochemical device**

In the third aspect, the embodiments of the present application provide an electrochemical device. The electrochemical device includes a positive electrode plate, a negative electrode plate and an electrolyte, wherein the positive electrode plate and/or the negative electrode plate are/is the electrode plate according to the second aspect of the present application.

Examples of the electrochemical device include, but are not limited to, a lithium-ion secondary battery, a lithium primary battery, a sodium ion battery, a magnesium ion battery, etc.

The electrochemical device adopts the electrode plate provided according to the second aspect of the embodiments of the present application, and thus the electrochemical device of the embodiments of the present application has relatively high comprehensive electrochemical performance, including relatively high energy density, rate performance, cycle performance and safety performance.

In the electrochemical device of the embodiments of the present application, the electrolyte may be a solid electrolyte or a non-aqueous electrolytic solution, such as those obtained by dispersing an electrolyte salt in an organic solvent.

In the aforementioned electrolyte, the organic solvent serves as a medium to transport ions in electrochemical reaction, and may adopt any organic solvent in the art. As a source of ions, the electrolyte salt may be any electrolyte salt in the art.

For example, the organic solvent for lithium-ion secondary batteries may be one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

For example, the electrolyte salt for lithium-ion secondary batteries may be one or more of $LiPF_6$ (lithium hexafluorophosphate), $LiBF_4$ (lithium tetrafluoroborate), $LiClO_4$ (lithium perchlorate), $LiAsF_6$ (lithium hexafluoroarsenate), LiFSI (lithium difluorosulfimide), LiTFSI (lithium bistrifluoromethanesulfonimide), LiTFS (lithium trifluoromethanesulfonate), LiDFOB (lithium difluorooxalate), LiBOB (lithium bisoxalate), $LiPO_2F_2$ (lithium difluorophosphate), LiDFOP (lithium difluorobisoxalate phosphate), and LiTFOP (lithium tetrafluorooxalate phosphate).

The electrolyte may further optionally include additives. The type of additives is not specifically limited, and may be selected according to requirements. For example, the additives may include negative electrode film-forming additives, positive electrode film-forming additives, and additives that can improve some performances of the battery, such as additives that improve overcharge performance of the battery, additives that improve high-temperature performance of the battery, and additives that improve low-temperature performance of the battery.

As an example, the additives may include one or more of vinylene carbonate (VC), vinyl ethylene carbonate (VEC), fluoroethylene carbonate (FEC), succinonitrile (SN), adiponitrile (ADN), 1,3-propylene sultone (PST), tris(trimethylsilane) phosphate (TMSP), and tris(trimethylsilane) borate (TMSB).

When the electrochemical device adopts an electrolytic solution, a separator is required to be disposed between the positive electrode plate and the negative electrode plate for separation. The type of separator is not specially limited, and the separator may be any known porous separator with good chemical and mechanical stability, such as one or more of glass fiber, non-woven fabric, polyethylene, polypropylene, and polyvinylidene fluoride. The separator may be a single-layer film or a multi-layer composite film. When the separator is a multi-layer composite film, materials of respective layers may be the same or different.

The electrochemical device is prepared by the steps of stacking the positive electrode plate, the separator and the negative electrode plate in order so that the separator is disposed between the positive electrode plate and the negative electrode plate for isolation to obtain a battery core, which may be obtained by winding; placing the battery core into a package shell followed by injecting the electrolytic solution and sealing.

Examples

The following examples more specifically describe the content disclosed in the present application, and these examples are only used for explanatory description, because various modifications and changes within the scope of the present disclosure, as defined by the claims, are obvious to those skilled in the art. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

**Preparation methods**

Preparation of composite negative electrode current collector

A organic support layer with a predetermined thickness was selected and subjected to surface cleaning treatment, the organic support layer after the surface cleaning treatment was placed in a vacuum evaporation chamber, a high-purity copper wire in the metal evaporation chamber was melted and evaporated at a high temperature from 1300°C to 2000°C, and the evaporated metal passed through a cooling system in the vacuum evaporation chamber and was finally deposited on two surfaces of the organic support layer to form a copper based conductive layer.

Preparation of conventional negative electrode current collector

A copper foil with a thickness of 8 $\mu$m was used.

Preparation of negative electrode plate

Negative electrode active materials including graphite, conductive carbon black, sodium carboxymethyl cellulose as a thickener, and styrene butadiene rubber emulsion (SBR) as a binder were mixed thoroughly at a weight ratio of 96.5: 1.0: 1.0: 1.5 in an appropriate amount of deionized water to form a uniform negative electrode slurry; the negative electrode slurry was applied to a negative electrode current collector, and a negative electrode plate was obtained after steps including drying and the like.

Preparation of composite positive electrode current collector

An organic support layer with a predetermined thickness was selected and subjected to surface cleaning treatment, the organic support layer after the surface cleaning treatment was placed in a vacuum evaporation chamber, a high-purity aluminum wire in the metal evaporation chamber was melted and evaporated at a high temperature from 1300°C to 2000°C, and the evaporated metal passed through a cooling system in the vacuum evaporation chamber and was finally deposited on two surfaces of the organic support layer to form an aluminum-based conductive layer.

Preparation of conventional positive electrode current collector

An aluminum foil with a thickness of 12 $\mu$m was used.

Preparation of positive electrode plate

Positive electrode active materials including $LiNi_{1/3}Co_{1/3}Mn_{1/3}O_2$ (NCM333), conductive carbon black, and polyvinylidene fluoride (PVDF) as a binder were mixed thoroughly at a weight ratio of 93: 2: 5 in an appropriate amount of N-methylpyrrolidone (NMP) solvent to form a uniform positive electrode slurry; the positive electrode slurry was applied to a positive electrode current collector, and a positive electrode plate was obtained after steps including drying and the like.

Preparation of electrolytic solution

Ethylene carbonate (EC) and ethyl methyl carbonate (EMC) at a volume ratio of 3: 7 were mixed uniformly to obtain an organic solvent, and then 1 mol/L $LiPF_6$ was uniformly dissolved in the organic solvent.

Preparation of lithium-ion secondary battery

The positive electrode plate, the separator which was a PP/ PE/ PP composite film, and the negative electrode plate were laminated in sequence and then wound into an electrode assembly, and the electrode assembly was packaged into a packaging housing, injected with the electrolyte and sealed to obtain a lithium-ion secondary battery.

**Test section**

1. Test of the current collector

1) Test of brittleness parameter of the current collector

The organic support layer was cut into a sample with a width of 15 mm and a length of 150 mm which was then loaded into an upper clamp and a lower clamp of American INSTRON 3365 universal tensile tester with an initial length set to 50 mm, and then a tensile test was performed at a tensile rate of 5 mm/min until the sample broke; maximum tensile force F borne when the sample broke was recorded, and a tensile strength $T_2$ of the organic support layer was calculated according to $T_2 = F/ S$. S was initial cross-sectional area of the sample, which was equal to the product of the width and thickness of the sample (i.e., the thickness $D_2$ of the organic support layer).

The same method was used to measure the tensile strength $T_1$ of the metal conductive layer.

The thickness $D_1$ of the metal conductive layer and the thickness $D_2$ of the organic support layer were measured by a ten-thousandth micrometer.

The brittleness parameter C of the composite current collector = (the tensile strength $T_1$ of the metal conductive layer $\times$ the thickness $D_1$ of the metal conductive layer)/ (the tensile strength $T_2$ of the organic support layer $\times$ the thickness $D_2$ of the organic support layer).

2) Test of elongation at break of the composite current collector

The composite current collector was cut into a sample of 15 mm $\times$ 200 mm, a tensile test was performed by Go-tech tensile tester at normal temperature and pressure (25°C, 0.1 MPa), an initial position was set such that the sample between the clamps was 50 mm long, the sample was stretched at a speed of 5 mm/ min, the clamp displacement y (mm) at tensile break was recorded, and finally the elongation at break was calculated as (y/ 50) $\times$ 100%.

2. Performance test of the battery

(1) Cycle performance test

At 45°C, the lithium-ion secondary battery was charged to 4.2 V at a constant current rate of 1C and then charged at a constant voltage until the current was $\leq 0.05C$, and afterwards discharged at a constant current rate of 1C to 2.8 V. This was a charge-discharge cycle. The discharge capacity at this time was a discharge capacity of the first cycle. The lithium-ion secondary battery was subjected to 1000 charge-discharge cycles according to the above method, the discharge capacity of the 1000th cycle was recorded, and a capacity retention rate of the lithium-ion secondary battery after 1000 cycles at 1C/1C was calculated.
The cycle performance of the lithium-ion secondary battery at 45°C was tested in accordance with the aforementioned test.

Capacity retention rate of lithium-ion secondary battery after 1000 cycles at 1C/1C (%) = the discharge capacity of the 1000th cycle/ the discharge capacity of the first cycle $\times$ 100%

(2) Rate performance test

At 25°C, the lithium-ion secondary battery was charged to 4.2 V at a constant current rate of 1C and then charged at a constant voltage until the current was $\leq 0.05C$, and afterwards discharged at a constant current rate of 1C to 3.0 V, thereby obtaining 1C rate discharge capacity of the lithium-ion secondary battery.
At 25°C, the lithium-ion secondary battery was charged to 4.2 V at a constant current rate of 1C and then charged at a constant voltage until the current was $\leq 0.05C$, and afterwards discharged at a constant current rate of 4C to 3.0 V, thereby obtaining 4C rate discharge capacity of the lithium-ion secondary battery.

4C rate capacity retention rate (%) of the lithium ion secondary battery = 4C rate discharge capacity/1C rate discharge capacity $\times$ 100%

**Test results**

1. Effect of the composite current collector in improving the gravimetric energy density of the electrochemical device

1) When the composite current collector was used as a positive electrode current collector, its effect in improving the gravimetric energy density of the electrochemical device

Table 1-1

| Number of positive electrode current collector | Organic support layer | | Metal conductive layer | | Thickness of positive electrode current collector ($\mu$m) | Weight percentage of positive electrode current collector (%) |
| --- | --- | --- | --- | --- | --- | --- |
| | Material | $D_2$ ($\mu$m) | Material | $D_1$ ($\mu$m) | | |
| Positive electrode current collector 1 | PET | 10 | Al | 0.5 | 11.0 | 48.3 |

(continued)

| Number of positive electrode current collector | Organic support layer | | Metal conductive layer | | Thickness of positive electrode current collector ($\mu$m) | Weight percentage of positive electrode current collector (%) |
|---|---|---|---|---|---|---|
| | Material | $D_2$ ($\mu$m) | Material | $D_1$ ($\mu$m) | | |
| Positive electrode current collector 2 | PI | 6 | Al | 0.3 | 6.6 | 30.0 |
| Positive electrode current collector 3 | PI | 5 | Al | 2 | 9 | 54.1 |
| Positive electrode current collector 4 | PI | 5 | Al | 1.5 | 8.0 | 45.8 |
| Positive electrode current collector 5 | PET | 10 | Al | 1 | 12 | 40.2 |
| Positive electrode current collector 6 | PET | 4 | Al | 0.9 | 5.8 | 31.0 |
| Positive electrode current collector 7 | PI | 2 | Al | 0.8 | 3.6 | 21.8 |
| Positive electrode current collector 8 | PI | 3 | Al | 0.2 | 3.4 | 15.8 |
| Positive electrode current collector 9 | PI | 1 | Al | 0.4 | 1.8 | 10.9 |
| Conventional positive electrode current collector | / | / | Al | 12.0 | 12.0 | 100 |

In Table 1-1, the weight percentage of the positive electrode current collector was a percentage of the weight of the positive electrode current collector per unit area relative to the weight of the conventional positive electrode current collector per unit area.

Compared with the traditional aluminum foil positive electrode current collector, the weight of the positive electrode current collectors adopting the composite current collector was reduced to various degrees, so that gravimetric energy densities of battery can be improved.

2) When the composite current collector was used as a negative electrode current collector, its effect in improving the gravimetric energy density of the electrochemical device

Table 1-2

| Number of negative electrode current collector | Insulating layer | Conductive layer | | Thickness of negative electrode current collector ($\mu$m) | Weight percentage of negative electrode current collector (%) |
|---|---|---|---|---|---|
| | Material | $D_2$ ($\mu$m) | Material | $D_1$ ($\mu$m) | | |
| Negative electrode current collector 1 | PET | 5 | Cu | 0.03 | 5.06 | 7 |
| Negative electrode current collector 2 | PET | 5 | Cu | 0.3 | 5.6 | 16 |
| Negative electrode current collector 3 | PET | 5 | Cu | 0.5 | 6 | 21.6 |

(continued)

| Number of negative electrode current collector | Insulating layer Material | Conductive layer D_2 (μm) | Material | Thickness of D_1 (μm) | negative electrode current collector (μm) | Weight percentage of negative electrode current collector (%) |
|---|---|---|---|---|---|---|
| Negative electrode current collector 4 | PET | 5 | Cu | 0.6 | 6.2 | 24.1 |
| Negative electrode current collector 5 | PI | 2 | Cu | 0.8 | 3.6 | 23.8 |
| Negative electrode current collector 6 | PET | 8 | Cu | 1 | 10 | 39.6 |
| Negative electrode current collector 7 | PET | 6 | Cu | 1.5 | 9 | 48.5 |
| Negative electrode current collector 8 | PET | 4 | Cu | 1.2 | 6.4 | 37.3 |
| Negative electrode current collector 9 | PET | 10 | Cu | 0.2 | 10.4 | 23.3 |
| Negative electrode current collector 10 | PI | 8 | Cu | 2 | 12 | 65.3 |
| Negative electrode current collector 11 | PET | 5 | Cu | 3 | 11 | 57.2 |
| Conventional negative electrode current collector | / | / | Cu | 8 | 8 | 100 |

In Table 1-2, the weight percentage of the negative electrode current collector was a percentage of the weight of the negative electrode current collector per unit area relative to the weight of the conventional negative electrode current collector per unit area.

Compared with the traditional copper foil negative electrode current collector, the weight of the negative electrode current collectors adopting the composite current collector was reduced to various degrees, so that gravimetric energy densities of battery can be improved.

2. Effect of the protective layer on the electrochemical performance of the composite current collector and the electrochemical device

Table 2-1

| Number of positive electrode current collector | Lower protective layer | | Upper protective layer | |
|---|---|---|---|---|
| | Material | D_b ( nm ) | Material | D_a (nm) |
| * Positive electrode current collector 7-1 | / | / | Nickel | 1 |
| * Positive electrode current collector 7-2 | / | / | Nickel oxide | 10 |
| * Positive electrode current collector 7-3 | / | / | Aluminum oxide | 50 |
| ** Positive electrode current collector 3-4 | / | / | Nickel oxide | 150 |
| * Positive electrode current collector 7-5 | Nickel | 5 | / | / |
| * Positive electrode current collector 7-6 | Aluminum oxide | 20 | / | / |
| * Positive electrode current collector 7-7 | Aluminum oxide | 80 | / | / |

(continued)

| Number of positive electrode current collector | Lower protective layer | | Upper protective layer | |
|---|---|---|---|---|
| | Material | $D_b$ ( nm ) | Material | $D_a$ (nm) |
| ** Positive electrode current collector 3-8 | Nickel oxide | 100 | / | / |
| * Positive electrode current collector 7-9 | Nickel | 5 | Nickel | 10 |
| * Positive electrode current collector 7-10 | Nickel oxide | 8 | Nickel oxide | 10 |
| * Positive electrode current collector 7-11 | Nickel oxide | 20 | Nickel oxide | 50 |
| ** Positive electrode current collector 3-12 | Nickel oxide | 30 | Nickel oxide | 50 |
| ** Positive electrode current collector 3-13 | Nickel oxide | 50 | Nickel oxide | 100 |

In Table 2-1, "*" represented the positive electrode current collector that was based on the positive electrode current collector 7 as shown in Table 1-1 and was provided with a protective layer; and "**" represents the positive electrode current collector that was based on the positive electrode current collector 3 as shown in Table 1-1 and was provided with a protective layer.

Table 2-2

| Number of battery | Positive electrode plate | | Negative electrode plate | Capacity retention rate at 45°C after 1000 1C/1C cycles (%) |
|---|---|---|---|---|
| | Number of positive electrode current collector | Number of positive electrode plate | | |
| Battery 1-1 | Positive electrode current collector 7 | Positive electrode plate 7 | Conventional negative electrode plate | 82.1 |
| Battery 1-2 | Positive electrode current collector 3 | Positive electrode plate 3 | Conventional negative electrode plate | 83.2 |
| Battery 1-3 | Positive electrode current collector 7-1 | Positive electrode plate 7-1 | Conventional negative electrode plate | 81.9 |
| Battery 1-4 | Positive electrode current collector 7-2 | Positive electrode plate 7-2 | Conventional negative electrode plate | 83.2 |
| Battery 1-5 | Positive electrode current collector 7-3 | Positive electrode plate 7-3 | Conventional negative electrode plate | 86.2 |
| Battery 1-6 | Positive electrode current collector 3-4 | Positive electrode plate 3-4 | Conventional negative electrode plate | 82.5 |
| Battery 1-7 | Positive electrode current collector 7-5 | Positive electrode plate 7-5 | Conventional negative electrode plate | 82.1 |
| Battery 1-8 | Positive electrode current collector 7-6 | Positive electrode plate 7-6 | Conventional negative electrode plate | 85.9 |
| Battery 1-9 | Positive electrode current collector 7-7 | Positive electrode plate 7-7 | Conventional negative electrode plate | 83.4 |
| Battery 1-10 | Positive electrode current collector 3-8 | Positive electrode plate 3-8 | Conventional negative electrode plate | 82.1 |
| Battery 1-11 | Positive electrode current collector 7-9 | Positive electrode plate 7-9 | Conventional negative electrode plate | 82.8 |
| Battery 1-12 | Positive electrode current collector 7-10 | Positive electrode plate 7-10 | Conventional negative electrode plate | 85.2 |
| Battery 1-13 | Positive electrode current collector 7-11 | Positive electrode plate 7-11 | Conventional negative electrode plate | 85.3 |

(continued)

| Number of battery | Positive electrode plate | | Negative electrode plate | Capacity retention rate at 45°C after 1000 1C/1C cycles (%) |
| --- | --- | --- | --- | --- |
| | Number of positive electrode current collector | Number of positive electrode plate | | |
| Battery 1-14 | Positive electrode current collector 3-12 | Positive electrode plate 3-12 | Conventional negative electrode plate | 85.7 |
| Battery 1-15 | Positive electrode current collector 3-13 | Positive electrode plate 3-13 | Conventional negative electrode plate | 83.5 |
| Battery 1-16 | Conventional positive electrode current collector | Conventional Positive electrode plate | Conventional negative electrode plate | 86.5 |

It can be seen from Table 2-2 that the cycle life of the batteries using the composite current collectors of the present application as a positive electrode current collector was good, and was equivalent to the cycle performance of the batteries using conventional positive electrode current collector. This showed that adopting the composite current collector of the embodiments of the present application as a positive electrode current collector would not have a significant adverse effect on the electrochemical performance of the battery and positive electrode plate. Particularly, for the battery made of the composite current collector provided with a protective layer, its capacity retention rate after 1000 1C/1C cycles were further improved, indicating that the reliability of the battery was better.

Table 2-3

| Number of negative electrode current collector | Upper protective layer | | Lower protective layer | |
| --- | --- | --- | --- | --- |
| | Material | $D_a$ ( nm ) | Material | $D_b$ ( nm ) |
| Negative electrode current collector 7-1 | / | / | Nickel | 1 |
| Negative electrode current collector 7-2 | / | / | Nickel | 10 |
| Negative electrode current collector 7-3 | / | / | Nickel based alloy | 50 |
| Negative electrode current collector 7-4 | / | / | Nickel | 150 |
| Negative electrode current collector 7-5 | Nickel | 5 | / | / |
| Negative electrode current collector 7-6 | Nickel based alloy | 100 | / | / |
| Negative electrode current collector 7-7 | Nickel | 10 | Nickel | 5 |
| Negative electrode current collector 7-8 | Nickel | 10 | Nickel | 10 |
| Negative electrode current collector 7-9 | Nickel | 50 | Nickel | 50 |
| Negative electrode current collector 7-10 | Nickel | 100 | Nickel | 50 |
| Negative electrode current collector 7-11 | Nickel | 150 | Nickel oxide | 75 |
| Negative electrode current collector 7-12 | Nickel oxide | 100 | Nickel | 50 |
| Negative electrode current collector 7-13 | Nickel oxide | 100 | Nickel | 50 |
| Negative electrode current collector 7-14 | Two-layer protective layer | 50 | Nickel oxide | 50 |

The negative electrode current collector in Table 2-3 was based on the negative electrode current collector 7 as shown in Table 1-2 and was provided with a protective layer.
The nickel-based alloy in Table 2-3 contained: nickel, 90wt%; chromium, 10wt%.
The two-layer protective layer in Table 2-3 includes a nickel protective layer on the surface of the conductive layer facing away from the organic support layer, with a thickness of 25nm; and a nickel oxide protective layer on the surface of the nickel protective layer facing away from the organic support layer, with a thickness of 25nm.

Table 2-4

| Number of battery | Negative electrode plate | | Capacity retention rate at 45°C for 1000 1C/1C cycles (%) | 4C rate capacity retention rate (%) |
| --- | --- | --- | --- | --- |
| | Number of negative electrode plate | Number of negative electrode current collector | | |
| Battery 2-1 | Negative electrode plate 7 | Negative electrode current collector 7 | 86.3 | 46.8 |
| Battery 2-2 | Negative electrode plate 7-1 | Negative electrode current collector 7-1 | 86.3 | 46.5 |
| Battery 2-3 | Negative electrode plate 7-2 | Negative electrode current collector 7-2 | 86.7 | 46.6 |
| Battery 2-4 | Negative electrode plate 7-3 | Negative electrode current collector 7-3 | 86.5 | 46.0 |
| Battery 2-5 | Negative electrode plate 7-4 | Negative electrode current collector 7-4 | 87.1 | 47.4 |
| Battery 2-6 | Negative electrode plate 7-5 | Negative electrode current collector 7-5 | 86.5 | 46.4 |
| Battery 2-7 | Negative electrode plate 7-6 | Negative electrode current collector 7-6 | 86.7 | 46.1 |
| Battery 2-8 | Negative electrode plate 7-7 | Negative electrode current collector 7-7 | 87.2 | 47.3 |
| Battery 2-9 | Negative electrode plate 7-8 | Negative electrode current collector 7-8 | 87.6 | 47.5 |
| Battery 2-10 | Negative electrode plate 7-9 | Negative electrode current collector 7-9 | 87.8 | 47.7 |
| Battery 2-11 | Negative electrode plate 7-10 | Negative electrode current collector 7-10 | 88.0 | 48.1 |
| Battery 2-12 | Negative electrode plate 7-11 | Negative electrode current collector 7-11 | 88.3 | 48.6 |
| Battery 2-13 | Negative electrode plate 7-12 | Negative electrode current collector 7-12 | 87.3 | 46.2 |
| Battery 2-14 | Negative electrode plate 7-13 | Negative electrode current collector 7-13 | 86.9 | 48.3 |
| Battery 2-15 | Negative electrode plate 7-14 | Negative electrode current collector 7-14 | 87.9 | 47.7 |
| Battery 2-16 | Conventional negative electrode plate | Conventional negative electrode current collector | 86.7 | 47.9 |

The batteries of table 2-4 adopted the conventional positive electrode plate.

It can be seen from Table 2-4 that the cycle life and rate performance of the batteries using the composite current collectors of the present application as a negative electrode current collector were good, and were equivalent to the cycle performance and rate performance of the batteries using the conventional positive electrode current collector and the conventional negative electrode current collector. This showed that the composite current collector of the embodiments of the present application would not have a significant adverse effect on the electrochemical performance of the battery. Particularly, for the battery made of the composite current collector provided with a protective layer, the capacity retention rate at 45°C for 1000 1C/1C cycles and 4C rate capacity retention rate were further improved, indicating that the reliability of the battery was better.

3. Brittleness parameter of the composite current collector and its effect on mechanics properties of the composite current collector

Table 3-1

| Number of positive electrode current collector | Support layer | | | Conductive layer | | | Brittleness parameter C | Elongation at break (%) |
|---|---|---|---|---|---|---|---|---|
| | Material | $T_2$ (MPa) | $D_2$ (μm) | Material | $T_1$ (MPa) | $D_1$ (μm) | | |
| Positive electrode current collector 1 | PET | 200 | 10 | Al | 200 | 0.5 | 0.01 | 64 |
| Positive electrode current collector 2 | PI | 300 | 6 | Al | 200 | 0.3 | 0.033 | 48 |
| Positive electrode current collector 3 | PI | 300 | 5 | Al | 200 | 2 | 0.111 | 4.40 |
| Positive electrode current collector 4 | PI | 300 | 5 | Al | 200 | 1.5 | 0.167 | 3.40 |
| Positive electrode current collector 5 | PET | 200 | 10 | Al | 200 | 1 | 0.100 | 4.50 |
| Positive electrode current collector 6 | PET | 200 | 4 | Al | 200 | 0.9 | 0.150 | 3.70 |
| Positive electrode current collector 7 | PET | 200 | 2 | Al | 200 | 0.8 | 0.300 | 3.10 |
| Positive electrode current collector 8 | PET | 200 | 3 | Al | 200 | 0.2 | 0.350 | 2.50 |
| Positive electrode current collector 9 | PET | 200 | 1 | Al | 200 | 0.4 | 0.500 | 2.30 |
| Comparative positive electrode current collector | PET | 200 | 5 | Al | 200 | 3 | 0.6 | 1.10 |

Table 3-2

| Number of negative electrode current collector | Organic support layer | | | Metal conductive layer | | | Brittleness parameter C | Elongation at break (%) |
|---|---|---|---|---|---|---|---|---|
| | Material | $T_2$ (MPa) | $D_2$ (μm) | Material | $T_1$ (MPa) | $D_1$ (μm) | | |
| Negative electrode current collector 1 | PET | 200 | 5 | Cu | 300 | 0.03 | 0.01 | 45 |
| Negative electrode current collector 2 | PET | 200 | 5 | Cu | 300 | 0.3 | 0.025 | 37 |
| Negative electrode current collector 3 | PET | 200 | 5 | Cu | 300 | 0.5 | 0.1 | 24 |
| Negative electrode current collector 4 | PET | 200 | 5 | Cu | 300 | 0.6 | 0.2 | 5.70 |
| Negative electrode | PI | 300 | 2 | Cu | 300 | 0.8 | 0.2 | 5.30 |

(continued)

| Number of negative electrode current collector | Organic support layer | | | Metal conductive layer | | | Brittleness parameter C | Elongation at break (%) |
|---|---|---|---|---|---|---|---|---|
| | Material | $T_2$ ( MPa ) | $D_2$ ( $\mu$m ) | Material | $T_1$ ( MPa ) | $D_1$ ( $\mu$m ) | | |
| current collector 5 | | | | | | | | |
| Negative electrode current collector 6 | PET | 200 | 8 | Cu | 300 | 1 | 0.1875 | 6.50 |
| Negative electrode current collector 7 | PET | 200 | 6 | Cu | 300 | 1.5 | 0.3 | 3.80 |
| Negative electrode current collector 8 | PET | 200 | 4 | Cu | 300 | 1.2 | 0.45 | 3.30 |
| Negative electrode current collector 9 | PET | 200 | 10 | Cu | 300 | 0.2 | 0.03 | 32 |
| Negative electrode current collector 10 | PI | 300 | 8 | Cu | 300 | 2 | 0.25 | 4.60 |
| Negative electrode current collector 11 | PET | 200 | 5 | Cu | 300 | 3 | 0.45 | 3.60 |
| Comparative negative electrode current collector | PET | 200 | 5 | Cu | 300 | 2 | 0.6 | 1.40 |

From the results in Table 3-1 and Table 3-2, it can be seen that the brittleness parameter, from 0.01 to 0.5, of the composite current collector improved the elongation at break of the composite current collector, and the elongation at break of the composite current collector was 2% or more, or even 3% or more, which ensured that the composite current collector had relatively high mechanics and mechanical properties, and that it can withstand certain deformation without breakage during the production and working process of the electrochemical device. This can be beneficial to improving the processability property of the composite current collector and its stability during use, and effectively prevent it from breaking or cracking during preparation and use, thereby significantly improving yields of the composite current collector and the electrode plate and electrochemical device using the same during preparation and their reliability during use.

Described above are merely specific embodiments of the present application, but the protection scope of the present application is not limited to thereto. Any modification, replacement, or other equivalent readily conceived by a skilled person in the art according to the disclosure of the present application shall fall within the protection scope of the present application. Therefore, the protection scope of the present application shall be subject to the protection scope of the claims.

## Claims

1. A composite current collector (10), wherein it comprises an organic support layer (101) and an metal conductive layer (102) disposed on at least one surface of the organic support layer (101); and

the composite current collector (10) has a brittleness parameter C of $0.01 \leq C \leq 0.5$,
in which the brittleness parameter C of the composite current collector (10) is obtained according to formula 1:

$$C = (T_1 \times D_1)/(T_2 \times D_2) \quad \text{formula 1}$$

wherein $T_1$ is a tensile strength of the metal conductive layer (102), $D_1$ is a thickness of the metal conductive layer

(102), $T_2$ is a tensile strength of the organic support layer (101), $D_2$ is a thickness of the organic support layer (101), and

wherein the composite current collector further comprises a protective layer (103), the protective layer (103) is disposed on the surface of the metal conductive layer (102) facing toward the organic support layer (101), or disposed on two opposite surfaces of the metal conductive layer (102) in the thickness direction of the metal conductive layer (102).

2. The composite current collector (10) according to claim 1, wherein the composite current collector (10) has a brittleness parameter C of $0.1 \leq C \leq 0.3$.

3. The composite current collector (10) according to claim 1 or 2, wherein the metal conductive layer (102) has a tensile strength $T_1$ of $150\ \text{MPa} \leq T_1 \leq 500\ \text{MPa}$, and preferably $200\ \text{MPa} \leq T_1 \leq 350\ \text{MPa}$; and/or
the organic support layer (101) has a tensile strength $T_2$ of $100\ \text{MPa} \leq T_2 \leq 400\ \text{MPa}$, and preferably $150\ \text{MPa} \leq T_2 \leq 300\ \text{MPa}$.

4. The composite current collector (10) according to claim 1 or 2, wherein the organic support layer (101) has a Young's modulus E of $E \geq 2\ \text{GPa}$, and preferably $2\ \text{GPa} \leq E \leq 20\ \text{GPa}$.

5. The composite current collector (10) according to any one of claims 1 to 4, wherein the metal conductive layer (102) has a thickness $D_1$ of $30\ \text{nm} \leq D_1 \leq 3\ \mu\text{m}$, preferably $300\ \text{nm} \leq D_1 \leq 2\ \mu\text{m}$, preferably $500\ \text{nm} \leq D_1 \leq 1.5\ \mu\text{m}$, and more preferably $800\ \text{nm} \leq D_1 \leq 1.2\ \mu\text{m}$; and/or,
the organic support layer (101) has a thickness $D_2$ of $1\ \mu\text{m} \leq D_2 \leq 30\ \mu\text{m}$, preferably $1\ \mu\text{m} \leq D_2 \leq 20\ \mu\text{m}$, preferably $1\ \mu\text{m} \leq D_2 \leq 15\ \mu\text{m}$, preferably $2\ \mu\text{m} \leq D_2 \leq 10\ \mu\text{m}$, preferably $2\ \mu\text{m} \leq D_2 \leq 8\ \mu\text{m}$, and more preferably $2\ \mu\text{m} \leq D_2 \leq 6\ \mu\text{m}$.

6. The composite current collector (10) according to any one of claims 1 to 5, wherein the metal conductive layer (102) comprises one or more of aluminum, aluminum alloy, nickel, nickel alloy, copper, copper alloy, titanium and silver; and/or
the metal conductive layer (102) is a vapor deposited layer or an electroplated layer.

7. The composite current collector (10) according to any one of claims 1 to 6, wherein the organic support layer (101) comprises one or more of polymer materials and polymer based composite materials;

the polymer materials are one or more of polyamide, polyimide, polyethylene terephthalate, polybutylene terephthalate, polyethylene naphthalate, polycarbonate, polyethylene, polypropylene, poly(propylene-co-ethylene), acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene ether, polyphenylene sulfide, polyethylene glycol, polysulfur nitride, polyphenylene, polypyrrole, polyaniline, polythiophene, polypyridine, cellulose, starch, protein, epoxy resin, phenol resin, derivatives thereof, cross linkers thereof, and copolymers thereof; and
the polymer-based composite materials comprise the polymer material and an additive, and the additive comprises one or more of metallic materials and inorganic non-metallic materials.

8. The composite current collector (10) according to any one of claims 1 to 7,
wherein

the protective layer (103) comprises one or more of metals, metal oxides and conductive carbon, and preferably comprises one or more of nickel, chromium, nickel-based alloy, copper-based alloy, alumina, cobalt oxide, chromium oxide, nickel oxide, graphite, superconducting carbon, acetylene black, carbon black, Ketjen black, carbon dots, carbon nanotubes, graphene, and carbon nanofibers;
preferably the protective layer (103) has a thickness $D_3$ of $1\ \text{nm} \leq D_3 \leq 200\ \text{nm}$, and the thickness $D_3$ pf the protective layer (103) and the thickness $D_1$ of the metal conductive layer (102) satisfies: $D_3 \leq 0.1\ D_1$.

9. An electrode plate (30), comprising a current collector (10) and an active material layer (20) disposed on the current collector, wherein the current collector (10) is the composite current collector (10) according to any one of claims 1 to 8.

10. An electrochemical device, comprising a positive electrode plate, a negative electrode plate and an electrolyte, wherein the positive electrode plate and/or the negative electrode plate are/is the electrode plate (30) according to claim 9.

**Patentansprüche**

1. Verbundstromabnehmer (10), wobei er eine organische Trägerschicht (101) und eine metallische leitfähige Schicht (102) umfasst, die auf mindestens einer Oberfläche der organischen Trägerschicht (101) angeordnet ist; und

   der Verbundstromabnehmer (10) einen Sprödigkeitsparameter C von $0,01 \leq C \leq 0,5$ aufweist,
   wobei sich der Sprödigkeitsparameter C des Verbundstromabnehmers (10) gemäß der Formel 1 ergibt:

$$C = (T_1 \times D_1)/(T_2 \times D_2) \qquad \text{Formel 1}$$

   wobei $T_1$ eine Zugfestigkeit der metallischen leitfähigen Schicht (102) ist, $D_1$ eine Dicke der metallischen leitfähigen Schicht (102) ist, $T_2$ eine Zugfestigkeit der organischen Trägerschicht (101) ist, $D_2$ eine Dicke der organischen Trägerschicht (101) ist, und
   wobei der Verbundstromabnehmer ferner eine Schutzschicht (103) umfasst, wobei die Schutzschicht (103) auf einer der organischen Trägerschicht (101) zugewandten Oberfläche der metallischen leitfähigen Schicht (102) angeordnet ist, oder auf zwei gegenüberliegenden Oberflächen der metallischen leitfähigen Schicht (102) in der Dickenrichtung der metallischen leitfähigen Schicht (102) angeordnet ist.

2. Verbundstromabnehmer (10) nach Anspruch 1, wobei der Verbundstromabnehmer (10) einen Sprödigkeitsparameter C von $0,1 \leq C \leq 0,3$ aufweist.

3. Verbundstromabnehmer (10) nach Anspruch 1 oder 2, wobei die metallische leitfähige Schicht (102) eine Zugfestigkeit $T_1$ von $150\ \text{MPa} \leq T_1 \leq 500\ \text{MPa}$, und vorzugsweise $200\ \text{MPa} \leq T_1 \leq 350\ \text{MPa}$ aufweist; und/oder
   die organische Trägerschicht (101) eine Zugfestigkeit $T_2$ von $100\ \text{MPa} \leq T_2 \leq 400\ \text{MPa}$ und vorzugsweise $150\ \text{MPa} \leq T_2 \leq 300\ \text{MPa}$ aufweist.

4. Verbundstromabnehmer (10) nach Anspruch 1 oder 2, wobei die organische Trägerschicht (101) einen Elastizitätsmodul E von $E \geq 2\ \text{GPa}$ und vorzugsweise $2\ \text{GPa} \leq E \leq 20\ \text{GPa}$ aufweist.

5. Verbundstromabnehmer (10) nach einem der Ansprüche 1 bis 4, wobei die metallische leitfähige Schicht (102) eine Dicke $D_1$ von $30\ \text{nm} \leq D_1 \leq 3\ \mu\text{m}$, vorzugsweise $300\ \text{nm} \leq D_1 \leq 2\ \mu\text{m}$, vorzugsweise $500\ \text{nm} \leq D_1 \leq 1,5\ \mu\text{m}$ und besonders bevorzugt $800\ \text{nm} \leq D_1 \leq 1,2\ \mu\text{m}$ aufweist; und/oder,
   die organische Trägerschicht (101) eine Dicke $D_2$ von $1\ \mu\text{m} \leq D_2 \leq 30\ \mu\text{m}$, vorzugsweise $1\ \mu\text{m} \leq D_2 \leq 20\ \mu\text{m}$, vorzugsweise $1\ \mu\text{m} \leq D_2 \leq 15\ \mu\text{m}$, vorzugsweise $2\ \mu\text{m} \leq D_2 \leq 10\ \mu\text{m}$, vorzugsweise $2\ \mu\text{m} \leq D_2 \leq 8\ \mu\text{m}$ und besonders bevorzugt $2\ \mu\text{m} \leq D_2 \leq 6\ \mu\text{m}$ aufweist.

6. Verbundstromabnehmer (10) nach einem der Ansprüche 1 bis 5, wobei die metallische leitfähige Schicht (102) eines oder mehrere der folgenden Elemente umfasst: Aluminium, Aluminiumlegierung, Nickel, Nickellegierung, Kupfer, Kupferlegierung, Titan und Silber; und/oder
   die metallische leitfähige Schicht (102) eine aufgedampfte Schicht oder eine galvanisch abgeschiedene Schicht ist.

7. Verbundstromabnehmer (10) nach einem der Ansprüche 1 bis 6, wobei die organische Trägerschicht (101) eines oder mehrere von Polymermaterialien und Verbundmaterialien auf Polymerbasis umfasst;

   die Polymermaterialien eines oder mehrere von Polyamid, Polyimid, Polyethylenterephthalat, Polybutylenterephthalat, Polyethylennaphthalat, Polycarbonat, Polyethylen, Polypropylen, Poly(propylen-co-ethylen), Acrylnitril-Butadien-StyrolCopolymer, Polyvinylalkohol, Polystyrol, Polyvinylchlorid, Polyvinylidenfluorid, Polytetrafluorethylen, Natriumpolystyrolsulfonat, Polyacetylen, Silikonkautschuk, Polyoxymethylen, Polyphenylenether, Polyphenylensulfid, Polyethylenglykol, Polysulfurnitrid, Polyphenylen, Polypyrrol, Polyanilin, Polythiophen, Polypyridin, Cellulose, Stärke, Protein, Epoxidharz, Phenolharz, Derivate davon, Vernetzer davon und Copolymere davon sind; und
   die Verbundmaterialien auf Polymerbasis das Polymermaterial und ein Additiv umfassen und das Additiv eines oder mehrere von metallischen Materialien und anorganischen nichtmetallischen Materialien umfasst.

8. Verbundstromabnehmer (10) nach einem der Ansprüche 1 bis 7,
   wobei

die Schutzschicht (103) eines oder mehrere von Metallen, Metalloxiden und leitfähigem Kohlenstoff umfasst, und vorzugsweise eines oder mehrere von Nickel, Chrom, Nickelbasislegierung, Kupferbasislegierung, Aluminiumoxid, Kobaltoxid, Chromoxid, Nickeloxid, Graphit, supraleitfähigem Kohlenstoff, Acetylenschwarz, Ruß, Ketjenschwarz, Kohlenstoffpunkten, Kohlenstoffnanoröhren, Graphen und Kohlenstoffnanofasern umfasst; vorzugsweise die Schutzschicht (103) eine Dicke $D_3$ von 1 nm $\leq D_3 \leq$ 200 nm aufweist, und die Dicke $D_3$ der Schutzschicht (103) und die Dicke $D_1$ der metallischen leitfähigen Schicht (102) die folgende Gleichung erfüllen: $D_3 \leq 0,1 \, D_1$.

9. Elektrodenplatte (30), umfassend einen Stromabnehmer (10) und eine auf dem Stromabnehmer angeordnete Schicht (20) aus aktivem Material, wobei der Stromabnehmer (10) der Verbundstromabnehmer (10) nach einem der Ansprüche 1 bis 8 ist.

10. Elektrochemische Vorrichtung, umfassend eine positive Elektrodenplatte, eine negative Elektrodenplatte und einen Elektrolyten, wobei die positive Elektrodenplatte und/oder die negative Elektrodenplatte die Elektrodenplatte (30) nach Anspruch 9 sind/ist.

**Revendications**

1. Collecteur de courant composite (10), comprenant une couche de support organique (101) et une couche conductrice métallique (102) disposée sur au moins une surface de la couche de support organique (101) ; et

le collecteur de courant composite (10) présente un paramètre de fragilité C satisfaisant à 0,01≤C≤0,5, dans lequel le paramètre de fragilité C du collecteur de courant composite (10) est obtenu par la formule 1 :

$$C = (T_1 \times D_1)/(T_2 \times D_2) \quad \text{formule 1}$$

dans lequel $T_1$ est une résistance à la traction de la couche conductrice métallique (102), $D_1$ est une épaisseur de la couche conductrice métallique (102), $T_2$ est une résistance à la traction de la couche de support organique (101), et $D_2$ est une épaisseur de la couche de support organique (101), et dans lequel le collecteur de courant composite comprend en outre une couche protectrice (103), la couche protectrice (103) est disposée sur la surface de la couche conductrice métallique (102) face à la couche de support organique (101), ou disposée sur deux surfaces opposées de la couche conductrice métallique (102) dans la direction de l'épaisseur de la couche conductrice métallique (102).

2. Collecteur de courant composite (10) selon la revendication 1, dans lequel le collecteur de courant composite (10) présente un paramètre de fragilité C satisfaisant à 0,1≤C≤0,3.

3. Collecteur de courant composite (10) selon la revendication 1 ou 2, dans lequel la couche conductrice métallique (102) présente une résistance à la traction $T_1$ satisfaisant à 150 MPa≤$T_1$≤500 MPa, et de préférence 200 MPa≤$T_1$ ≤350 MPa ; et/ou la couche de support organique (101) présente une résistance à la traction $T_2$ satisfaisant à 100 MPa ≤ $T_2$≤400 MPa, et de préférence 150 MPa ≤$T_2$≤300 MPa.

4. Collecteur de courant composite (10) selon la revendication 1 ou 2, dans lequel la couche de support organique (101) présente un module de Young E satisfaisant à E≥2 GPa, et de préférence 2 GPa≤E≤20 GPa.

5. Collecteur de courant composite (10) selon l'une quelconque des revendications 1 à 4, dans lequel la couche conductrice métallique (102) présente une épaisseur $D_1$ satisfaisant à 30 nm≤$D_1$≤3 μm, de préférence 300 nm ≤$D_1$≤2 μm, de préférence 500 nm≤$D_1$ ≤1,5 μm, et de plus préférence 800 nm ≤$D_1$≤1,2 μm ; et/ou, la couche de support organique (101) présente une épaisseur $D_2$ satisfaisant à 1 μm≤$D_2$≤30 μm, de préférence 1 μm≤$D_2$ ≤20 μm, de préférence 1 μm≤$D_2$≤15 μm, de préférence 2 μm≤$D_2$≤10 μm, de préférence 2 μm≤$D_2$ ≤8 μm, et de plus préférence 2 μm≤$D_2$≤ 6 μm.

6. Collecteur de courant composite (10) selon l'une quelconque des revendications 1 à 5, dans lequel la couche conductrice métallique (102) contient un ou plusieurs parmi l'aluminium, un alliage d'aluminium, le nickel, l'alliage de nickel, le cuivre, l'alliage de cuivre, le titane et l'argent ; et/ou la couche conductrice métallique (102) est une couche déposée en phase vapeur ou une couche galvanisée.

7.  Collecteur de courant composite (10) selon l'une quelconque des revendications 1 à 6, dans lequel la couche de support organique (101) comprend un ou plusieurs des matériaux polymères et des matériaux composites à base de polymère ;

les matériaux polymères sont un ou plusieurs parmi le polyamide, le polyimide, le polyéthylène téréphtalate, le polybutylène téréphtalate, le polyéthylène naphtalate, le polycarbonate, le polyéthylène, le polypropylène, le poly(propylène-co-éthylène), le copolymère acrylonitrile-butadiène-styrène, l'alcool polyvinylique, le polystyrène, le chlorure de polyvinyle, le fluorure de polyvinylidène, le polytétrafluoroéthylène, le polystyrène sulfonate de sodium, le polyacétylène, le caoutchouc de silicone, le polyoxyméthylène, l'éther de polyphénylène, le sulfure de polyphénylène, le polyéthylène glycol, le nitrure de polysoufre, le polyphénylène, le polypyrrole, le polyaniline, le polythiophène, le polypyridine, la cellulose, l'amidon, la protéine, la résine époxy, la résine phénolique, des dérivés de ceux-ci, des réticulants de ceux-ci et des copolymères de ceux-ci ; et

les matériaux composites à base de polymère comprennent le matériau polymère et un additif, et l'additif comprend un ou plusieurs des matériaux métalliques et des matériaux inorganiques non métalliques.

8.  Collecteur de courant composite (10) selon l'une quelconque des revendications 1 à 7,
    dans lequel,

la couche protectrice (103) comprend un ou plusieurs parmi un métal, un oxyde métallique et le carbone conducteur, de préférence un ou plusieurs parmi le nickel, le chrome, un alliage à base de nickel, un alliage à base de cuivre, l'alumine, l'oxyde de cobalt, l'oxyde de chrome, l'oxyde de nickel, le graphite, le carbone super-conducteur, le noir d'acétylène, le noir de carbone, le noir Ketjen, des points de carbone, des nanotubes de carbone, le graphène et des nanofibres de carbone ;

de préférence, la couche protectrice (103) présente une épaisseur $D_3$ satisfaisant à 1 nm$\leq D_3\leq$200 nm, et l'épaisseur $D_3$ de la couche protectrice (103) et l'épaisseur $D_1$ de la couche conductrice métallique (102) satisfont à : $D_3\leq$0,1 $D_1$.

9.  Plaque d'électrode (30), comprenant un collecteur de courant (10) et une couche de matériau actif (20) disposée sur le collecteur de courant, dans laquelle le collecteur de courant (10) est le collecteur de courant composite (10) selon l'une quelconque des revendications 1 à 8.

10. Dispositif électrochimique, comprenant une plaque d'électrode positive, une plaque d'électrode négative et un électrolyte, dans lequel la plaque d'électrode positive et/ou la plaque d'électrode négative sont/est la plaque d'électrode (30) selon la revendication 9.

10

101a

D₁ D₁

101

D₁ D₂

101b

102

Fig. 1

10

101a

1011
101
1012
1013

102

101b

Fig. 2

10

101a

D₁ D₃

D₁

D₂

101b

103
102
101

Fig. 3

<u>10</u>

101a                                103

D₁

101b

Fig. 4

10

101a                                103

D₁

D₂

101b

Fig. 5

<u>30</u>

10 —                                — 20

Fig.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005221190 A1
- CN 106654285 A